# FASCICULE DE BREVET EUROPEEN

(11) **EP 0 364 353 B1**
(45) Date de publication et mention de la délivrance du brevet: **10.03.1993**
(21) Numéro de dépôt: 89402789.5
(22) Date de dépôt: 10.10.1989
(51) Int. Cl.: G05D 1/03, G01C 21/00

(54) **Procédé de mesure de l'évolution de la position d'un véhicule par rapport à une surface**
Verfahren zur Messung der Positionsentwicklung eines Fahrzeugs im Bezug auf eine Oberfläche
Method of measuring the evolution of the position of a vehicle relative to a plane

(30) Priorité: 12.10.1988 FR 8813438
(43) Date de publication de la demande: 18.04.1990
(73) Titulaire: COMMISSARIAT A L'ENERGIE ATOMIQUE, 75015 Paris Cédex 15 (FR)
(72) Inventeur: Detriche, Jean-Marie, F-78590 Noisy Le Roi (FR); Micaelli, Alain, F-92260 Fontenay Aux Roses (FR)
(74) Mandataire: Mongrédien, André

(56) Documents cités:
- EP-A- 0 125 350
- EP-A- 0 139 292
- FR-A- 2 535 068
- FR-A- 2 554 612
- PATENT ABSTRACTS OF JAPAN, vol. 11, no. 103 (P-562)[2550], 2 avril 1987, page 38 P 562; & JP-A-61 251 911 (KOMATSU LTD) 08-11-1986

## Description

L'invention se rapporte à un procédé de mesure de l'évolution de la position d'un véhicule par rapport à une surface.

Parmi les procédés déjà utilisés pour guider un véhicule tel qu'un robot dans un environnement déterminé, on peut signaler ceux qui consistent à repérer au moyen de barrettes de capteurs le passage du véhicule devant des lignes de graduation verticales peintes sur un mur, à comparer une image prise par un moyen de prise de vues à une image emmagasinée dans la mémoire du robot, comme dans le document EP-A-0 139 292, à observer l'évolution des détails de l'environnement en avant du véhicule au cours de sa marche, et à créer une image tridimensionnelle de l'environnement par deux caméras orientées différemment.

Le premier procédé nécessite des repères immuables utilisés uniquement à cette fin ; le deuxième utilise une image mémorisée et nécessite un apprentissage, ce qui est trop peu souple pour de nombreuses applications ; les troisième et quatrième, qui nécessitent de puissants moyens de calcul, sont utilisés principalement pour l'évitement d'obstacles, la génération automatique de trajectoires dans un environnement encombré ou non structuré, c'est-à-dire muni d'obstacles dont la position peut varier.

Les procédés connus s'intéressent en outre généralement à la position absolue du véhicule dans l'environnement, ce qui est superflu pour un certain nombre d'applications.

On propose d'après l'invention un procédé de mesure de l'évolution de la position d'un véhicule qui soit utilisable pour de nombreux types d'environnement et qui soit simple à mettre en oeuvre pour permettre des mesures en temps réel.

Le procédé de mesure de l'évolution de la position d'un véhicule, muni d'un moyen fixe de prise d'images, conforme à l'invention est caractérisé en ce qu'il consiste à prendre périodiquement des images d'une surface garnie de motifs de repérage, à sélectionner une partie de chaque image située à une position déterminée sur l'image, à rechercher sur l'image suivante une partie identique à la partie sélectionnée et à déduire l'évolution de la position du véhicule entre les moments où les deux images ont été prises par comparaison des positions de la partie sélectionnée et de la partie identique sur leurs images respectives.

La surface garnie de motifs de repérage est avantageusement parallèle à la surface sur laquelle évolue le véhicule et peut éventuellement être confondue avec elle. La partie sélectionnée des images est en général située dans une portion desdites images orientée vers le sens de marche du véhicule.

Suivant une variante du procédé, on peut tout d'abord rechercher sur l'image suivante non pas la totalité de la partie sélectionnée de l'image précédente, mais un fragment de celle-ci. Si le fragment a pu être identifié sur l'image suivante, on examine si les alentours du fragment identifié et du fragment sélectionné sont identiques. Dans la négative, on peut sélectionner un autre fragment, éventuellement plus étendu, et on recommence l'opération de recherche.

On va maintenant commenter l'invention plus en détail à l'aide des figures suivantes annexées à titre illustratif et nullement limitatif :
- la figure 1 est une vue schématique d'un véhicule équipé d'un appareillage permettant la mise en oeuvre du procédé et évoluant dans un environnement approprié,
- la figure 2 représente une conception équivalente à celle de la figure 1,
- et la figure 3 explicite le procédé.

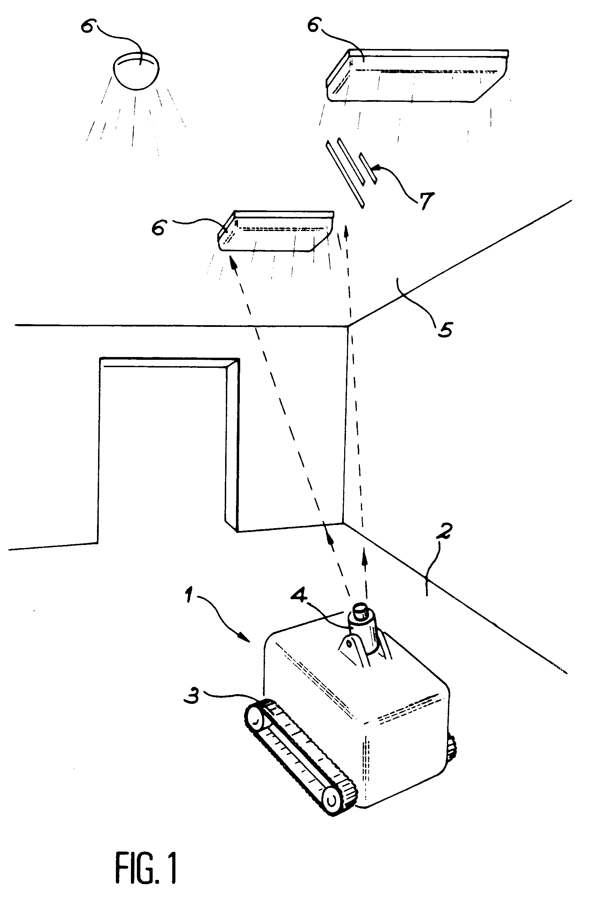

La figure 1 représente un véhicule robot 1 qui se déplace sur un plancher (surface d'évolution) 2 sur des chenilles 3, des roues ou tout moyen connu. Des moteurs permettent de diriger le véhicule 1 et des capteurs tels que des odomètres ou des gyromètres sont censés le guider en fournissant des informations de déplacement à une unité de commande qui agit sur les moteurs.

Comme les indications des capteurs dérivent avec le temps, le véhicule 1 est pourvu d'un moyen de prise de vues ou d'image tel qu'une caméra 4. La caméra 4 est fixe par rapport au véhicule 1, c'est-à-dire qu'elle est dirigée dans une direction constante par rapport à celui-ci. Sur la figure 1, elle est orientée vers un plafond 5, mais ce n'est pas obligatoire et elle peut tout aussi bien être orientée vers une autre surface garnie de motifs de repérage suffisants, de préférence perpendiculairement à cette surface ou avec une légère obliquité vers le sens de marche du véhicule 1. Il est simplement plus pratique que cette surface soit sensiblement parallèle à la surface d'évolution 2 du véhicule 1.

Les motifs de repérage peuvent prendre des formes très diverses selon les capacités de visualisation du moyen de prise d'images. On peut ainsi utiliser les moyens d'éclairage 6 accrochés au plafond 5, ou encore des bandes ou des formes quelconques 7 réfléchissantes ou de couleurs différentes. Aucune régularité, aucune symétrie n'est nécessaire et on peut même admettre des motifs sujets à des évolutions d'aspect, comme on va le constater plus loin.

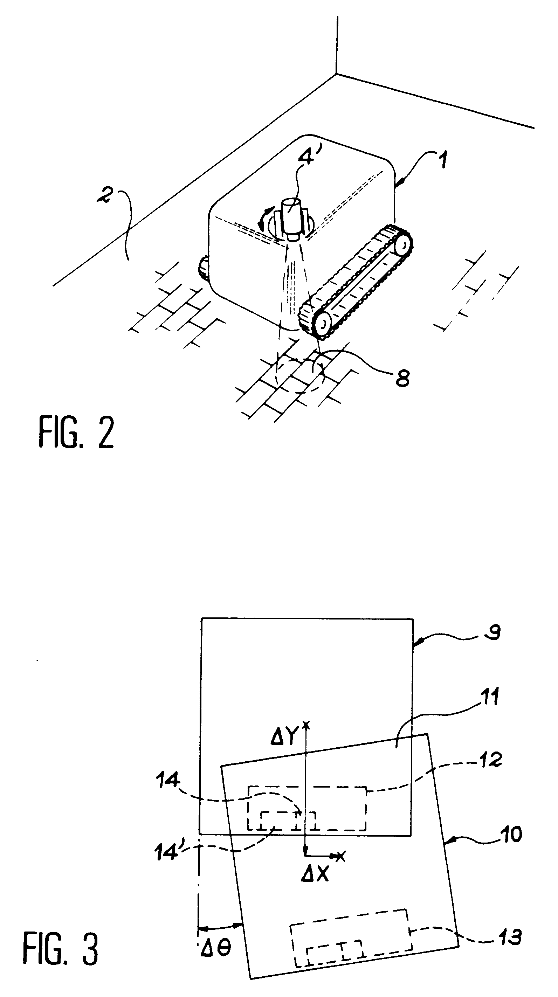

La figure 2 montre un exemple de véhicule 1 muni d'une caméra 4′ orientée vers le plancher 2 lui-même. La surface d'évolution du véhicule 1 est alors confondue avec la surface garnie de motifs de repérage, qui sont ici constitués de carrelages 8 de couleurs diverses mais qui pourraient de nouveau prendre des formes très diverses.

Dans tous les cas, le procédé de mesure de l'évolution de la position du véhicule 1, qui permet de se passer des informations sujettes à incertitudes des capteurs de déplacement, consiste à prendre périodiquement des images de la surface garnie de motifs de repérage.

La figure 3 montre deux de ces images prises consécutivement : une première image 9 et une deuxième image 10. Les deux images 9 et 10 sont distantes d'un écart longitudinal ΔY, d'un écart transversal ΔX et d'un écart angulaire Δϑ, ces trois écarts correspondant respectivement aux déplacements longitudinal, de côté et de lacet du véhicule 1, et elles possèdent une partie commune 11 où elles se chevauchent.

Le logiciel définit une partie sélectionnée 12 sur la première image 9, normalement vers le sens de marche du véhicule 1, et la met en mémoire. Quand la deuxième image 10 est prise, il recherche sur celle-ci une partie identique à la partie sélectionnée 12, ce qui est possible puisque les images sont prises à des intervalles de temps suffisamment rapprochés pour que la partie sélectionnée 12 soit incluse dans la partie commune 11.

Les positions de la partie sélectionnée 12 sur la première image 9 et de la partie identique à la partie sélectionnée sur la deuxième image 10 sont ensuite comparées pour en déduire les écarts ΔX, ΔY et Δϑ.

La recherche sur la deuxième image 10 peut évidemment ne s'exercer que sur une partie de celle-ci où on s'attend à trouver la partie identique à la partie sélectionnée 12 et notamment sa partie arrière. La partie avant de la deuxième image 10 est alors utilisée pour définir une nouvelle partie sélectionnée 13.

Quand les déplacements du véhicule 1 ont été calculés, l'unité de commande agit sur les moteurs pour diriger le véhicule 1 vers un point suivant de sa trajectoire où une nouvelle image sera prise. Les capteurs de déplacement sont utilisés pour guider approximativement le véhicule 1 vers ce point.

La fréquence de prise d'images peut être définie arbitrairement ou être réglée par le véhicule 1 lui-même en fonction de sa vitesse et du champ de vision de la caméra 4.

Plusieurs variantes du procédé sont envisageables afin d'accélérer les calculs. On peut ainsi rechercher tout d'abord sur la deuxième image 10 uniquement un fragment identique à un fragment 14 de la partie sélectionnée 12. Quand le logiciel estime que ce fragment identique a été trouvé, il compare les alentours du fragment sélectionné 14 -la position de la partie sélectionnée 12 non incluse dans le fragment sélectionné 14- aux alentours du fragment identique. Si la comparaison est concluante, l'identification est confirmée. Dans le cas contraire, il faut admettre qu'il y a eu confusion et une nouvelle identification est tentée à partie d'un autre fragment 14′ de la partie sélectionnée 12, éventuellement plus étendu que le précédent. Il en va de même si l'identification n'a pas abouti.

Cette méthode permet de tenir compte de la modification éventuelle des motifs de repérage, par exemple d'extinction intempestive d'une partie des moyens d'éclairage 6 : le logiciel constate que la partie identifiée sur la deuxième image 10 n'est pas tout à fait identique à la partie sélectionnée 12, mais néglige ces légères différences.

Les informations déduites des images sont utilisées par l'unité de commande pour corriger les informations des capteurs de déplacement. Les corrections peuvent être effectuées soit périodiquement, soit quand l'identification des deux images consécutives a été très bonne et ne laisse donc subsister aucun doute sur les déplacements du véhicule 1 entre les moments de prise de ces images.

## Revendications

1. Procédé de mesure de l'évolution de la position d'un véhicule (1) muni d'un moyen de prise d'images fixes (4, 4′) sur une surface d'évolution (2), caractérisé en ce qu'il consiste à prendre périodiquement des images (9, 10) d'une surface (2, 5) garnie de motifs de repérage (6, 7, 8), à sélectionner une partie (12) de chaque image située à une position déterminée sur l'image (9), à rechercher sur l'image suivante (10) une partie identique à la partie sélectionnée (12) et à déduire l'évolution de la position du véhicule (1) entre les moments où les deux images (9, 10) ont été prises par comparaison des positions de la partie sélectionnée (12) et de la partie identique à la partie sélectionnée sur leurs images respectives.

2. Procédé de mesure de l'évolution de la position d'un véhicule suivant la revendication 1, caractérisé en ce que la surface d'évolution (2) du véhicule est parallèle à la surface (5) garnie de motifs de repérage.

3. Procédé de mesure de l'évolution de la position d'un véhicule suivant la revendication 2, caractérisé en ce que la surface d'évolution du véhicule est confondue avec la surface garnie de motifs de repérage.

4. Procédé de mesure de l'évolution de la position d'un véhicule suivant l'une quelconque des revendications 1 à 3, caractérisé en ce que la partie sélectionnée (12) de l'image (9) est située dans une position de ladite image orientée vers le sens de marche du véhicule.

5. Procédé de mesure de l'évolution de la position d'un véhicule suivant l'une quelconque des revendications 1 à 4, caractérisé en ce qu'on recherche au préalable sur l'image suivante (10) un fragment identique à un fragment (14) de la partie sélectionnée (12).

## Claims

1. Method for measuring the change in position of a vehicle (1) fitted with a means (4, 4′) for taking still pictures of a surface of travel (2), characterised in that it consists in periodically taking pictures (9, 10) of a surface (2, 5) provided with location patterns (6, 7, 8), in selecting a part (12) of each image situated at a determined position on the picture (9), in searching on the following picture (10) for a part which is identical to the selected part (12) and in deducing the change in position of the vehicle (1) between the moments when the two pictures (9, 10) were taken by comparing the positions of the selected part (12) and the part which is identical to the selected part on their respective pictures.

2. Method for measuring the change in position of a vehicle according to Claim 1, characterised in that the surface of travel (2) of the vehicle is parallel to the surface (5) provided with location patterns.

3. Method for measuring the change in position of a vehicle according to Claim 2, characterised in that the surface of travel of the vehicle coincides with the surface provided with location patterns.

4. Method for measuring the change in position of a vehicle according to any one of Claims 1 to 3, characterised in that the selected part (12) of the picture (9) is situated in a position of the said picture oriented towards the direction of progression of the vehicle.

5. Method for measuring the change in position of a vehicle according to any one of Claims 1 to 4, characterised in that a search for a fragment which is identical to a fragment (14) of the selected part (12) is first made on the following picture (10).

## Patentansprüche

1. Verfahren zur Messung der Positionsentwicklung eines Fahrzeugs (1), ausgestattet mit feststehenden Erfassungsmitteln für Bilder (4, 4′), auf einer Entwicklungsfläche (2),
dadurch **gekennzeichnet**,
daß es darin besteht, periodisch Bilder (9, 10) aufzunehmen von einer Oberfläche (2, 5), die mit Bezugsmotiven (6, 7, 8) versehen ist, einen Ausschnitt (12) jedes Bildes auszuwählen, wobei dieser Ausschnitt sich in einer bestimmten Position in dem Bild (9) befindet, in dem nachfolgenden Bild (10) einen Ausschnitt zu suchen, der mit dem ausgewählten Ausschnitt (12) identisch ist und daraus die Positionsentwicklung des Fahrzeugs (1) zu folgern zwischen den Zeitpunkten, zu denen die beiden Bilder (9, 10) aufgenommen wurden, durch Vergleichen der Positionen des ausgewählten Ausschnitts (12) und des zum ausgewählten Ausschnitt identischen Ausschnitts in ihren jeweiligen Bildern.

2. Verfahren zur Messung der Positionsentwicklung eines Fahrzeugs nach Anspruch 1, dadurch gekennzeichnet, daß die Entwicklungsoberfläche (2) des Fahrzeugs parallel ist zur der mit den Bezugsmotiven versehenen Oberfläche (5) .

3. Verfahren zur Messung der Positionsentwicklung eines Fahrzeugs nach Anspruch 2, dadurch gekennzeichnet, daß die Entwicklungsoberfläche des Fahrzeugs ein Ganzes bildet mit der Oberfläche, die mit den Bezugsmotiven versehen ist.

4. Verfahren zur Messung der Positionsentwicklung eines Fahrzeugs nach einem der Ansprüche 1 bis 3, dadurch gekennzeichnet, daß der ausgewählte Ausschnitt (12) des Bildes (9) sich in einer Position des genannten Bildes befindet, die in der Bewegungsrichtung des des Fahrzeugs liegt.

5. Verfahren zur Messung der Positionsentwicklung eines Fahrzeugs nach einem der Ansprüche 1 bis 4, dadurch gekennzeichnet, daß man zuerst in dem nachfolgenden Bild (10) ein Fragment sucht, das identisch ist mit einem Fragment (14) des ausgewählten Ausschnitts (12).
